# EUROPEAN PATENT APPLICATION

(11) **EP 4 848 770 A1**
(43) Date of publication of application: **02.12.2026**
(21) Application number: 25761478.4
(22) Date of filing: 12.02.2025
(51) Int. Cl.: H04W 12/02, H04W 12/69, H04W 40/26, H04W 72/0453

(54) **WIRELESS COMMUNICATION DEVICE**

(30) Priority: 01.03.2024 JP 2024031499
(71) Applicant: JVCKenwood Corporation, Yokohama-shi, Kanagawa 2210022 (JP)
(72) Inventor: YOSHIMURA, Motoshi, Yokohama-shi, Kanagawa 221-0022 (JP)
(74) Representative: Wagner & Geyer
(86) International application number: PCT/JP2025/004577
(87) International publication number: WO 2025/182564

(57) **Abstract**

A wireless communication device includes a communication unit configured to communicate with predetermined wireless communication devices; a management unit configured to manage identification information and select identification information used by the wireless communication devices, the identification information including identifiers for identifying the wireless communication devices and usage statuses of frequencies usable for communication by the communication unit; and a communication control unit configured to control the communication unit to perform communication by using identification information assigned to the wireless communication device. In a case where a predetermined condition is satisfied, the management unit assigns newly selected identification information including at least one of an unused identifier and an unused frequency, and the communication control unit controls the communication unit to communicate with a first wireless communication device that is one of the predetermined wireless communication devices.

## Description

### Field

The present disclosure relates to wireless communication devices.

### Background

Techniques to prevent communication content from being intercepted by third parties and users' access histories from being collected have been known. Patent Literature 1 discloses a technique in which, in a mobile device whose connection location changes, identification information of the mobile device is changed at any untrusted connection location to prevent its access history from being identified, for example.

### Citation List

### Patent Literature

Patent Literature 1: Japanese National Publication of International Patent Application No. 2018-502513

### Summary

### Technical Problem

In the technique of Patent Literature 1, the transmission source (the profile) of the mobile device is changed, but for example, in a case where the mobile device accesses the same transmission destination within a short time period or access is always made at the same time, there is a possibility that the transmission source is identified as being the same.

An object of the present disclosure is to provide a wireless communication device enabling further improvement in confidentiality of communication histories. Solution to Problem

A wireless communication device according to the present disclosure includes: a communication unit configured to communicate with predetermined wireless communication devices; a management unit configured to manage identification information and select identification information used by the wireless communication devices, the identification information including identifiers for identifying the wireless communication devices and usage statuses of frequencies usable for communication by the communication unit; and a communication control unit configured to control the communication unit to perform communication by using the identification information assigned to the own wireless communication device. In a case where a predetermined condition is satisfied, the management unit is configured to assign a newly selected piece of the identification information, the newly selected piece including at least one of an unused one of the identifiers and an unused one of the frequencies, and the communication control unit is configured to control the communication unit to communicate with a first wireless communication device that is one of the predetermined wireless communication devices.

### Advantageous Effects of Invention

According to the present disclosure, confidentiality of communication histories is able to be further improved.

### Brief Description of Drawings

FIG. 1 is a diagram illustrating an example of a configuration of a communication system according to an embodiment.
FIG. 2 is a block diagram illustrating an example of a configuration of a terminal device according to the present disclosure.
FIG. 3 is a diagram illustrating an example of identification information according to the embodiment.
FIG. 4 is a diagram illustrating an example of identification information according to the embodiment.
FIG. 5 is a block diagram illustrating an example of a configuration of a server device according to the present disclosure.
FIG. 6 is a sequence diagram illustrating a flow of wireless communication processing according to the embodiment.
FIG. 7 is a diagram for description of a method of updating identification information, according to the embodiment.
FIG. 8 is a diagram for description of the method of updating identification information, according to the embodiment.
FIG. 9 is a diagram for description of a method of updating identification information, according to the embodiment.
FIG. 10 is a diagram for description of the method of updating identification information, according to the embodiment.
FIG. 11 is a diagram for description of a method of updating identification information, according to the embodiment.
FIG. 12 is a diagram for description of the method of updating identification information, according to the embodiment.
FIG. 13 is a sequence diagram illustrating a flow of wireless communication processing according to a modification of the embodiment.

### Description of Embodiments

An embodiment according to the present disclosure will be described in detail hereinafter by reference to the appended drawings. The present disclosure is not limited by the embodiment, and with respect to the following embodiment, redundant description of portions that are the same will be omitted by assigning the same reference sign to the same portions.

### [Embodiment]

### (Communication System)

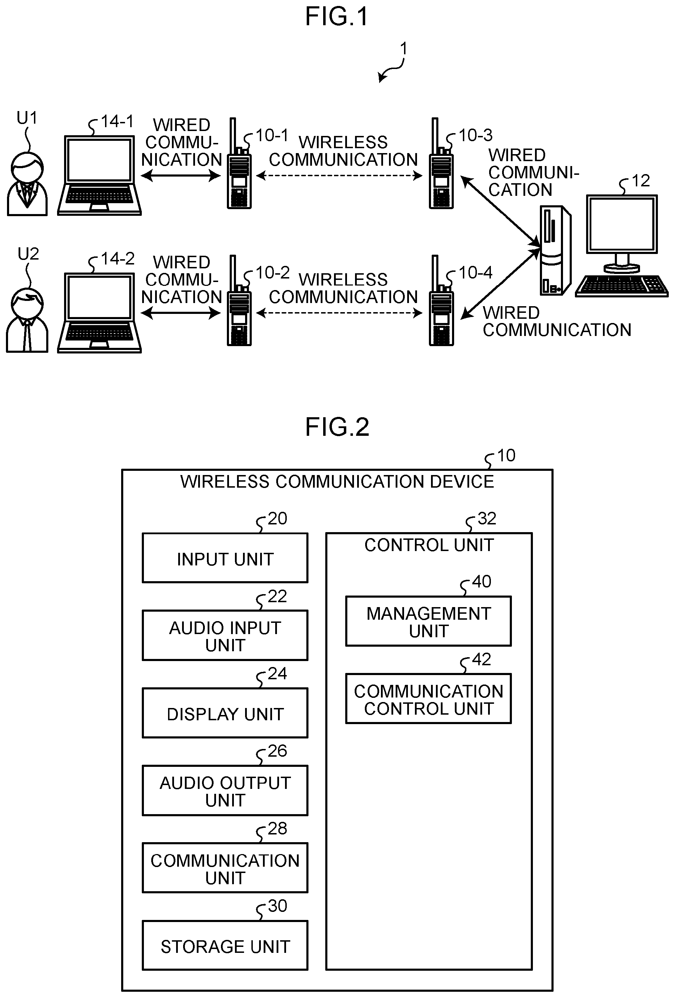

An example of a configuration of a communication system according to an embodiment will be described using FIG. 1. FIG. 1 is a diagram illustrating the example of the configuration of the communication system according to the embodiment.

As illustrated in FIG. 1, a communication system 1 includes a wireless communication device 10-1, a wireless communication device 10-2, a wireless communication device 10-3, a wireless communication device 10-4, a server device 12, a terminal device 14-1, and a terminal device 14-2.

The wireless communication device 10-1 and the terminal device 14-1 are devices used by a user U1. The wireless communication device 10-1 and the terminal device 14-1 are configured to perform, for example, wired communication. The wireless communication device 10-1 and the wireless communication device 10-3 are configured to perform, for example, wireless communication. The wireless communication device 10-3 is disposed around the server device 12. The wireless communication device 10-3 and the server device 12 are configured to perform, for example, wired communication. The wireless communication device 10-3 and the server device 12 may be configured to perform wireless communication. The user U1 is able to access the server device 12 that provides various types of information and acquire desired information, by using the terminal device 14-1 and causing the wireless communication device 10-1 and the wireless communication device 10-3 to communicate with each other.

The wireless communication device 10-2 and the terminal device 14-2 are devices used by a user U2. The wireless communication device 10-2 and the terminal device 14-2 are configured to perform, for example, wired communication. The wireless communication device 10-2 and the wireless communication device 10-4 are configured to perform, for example, wireless communication. The wireless communication device 10-4 is disposed around the server device 12. The wireless communication device 10-4 and the server device 12 are configured to perform, for example, wired communication. The wireless communication device 10-4 and the server device 12 may be configured to perform wireless communication. By using the terminal device 14-2 and causing the wireless communication device 10-2 and the wireless communication device 10-4 to communicate with each other, the user U2 is able to access the server device 12 that provides various types of information.

The wireless communication device 10-3 and the wireless communication device 10-4 may be configured to perform wired communication or may be configured to perform wireless communication. A communication protocol for a case where the wireless communication device 10-3 and the wireless communication device 10-4 perform wireless communication may be the same as or different from a communication protocol between the wireless communication device 10-1 and the wireless communication device 10-3 and a communication protocol between the wireless communication device 10-2 and the wireless communication device 10-4. The wireless communication device 10-3 and the wireless communication device 10-4 are disposed at positions close to each other and may thus be configured to be able to communicate using short-range wireless communication, such as Bluetooth (registered trademark).

The communication system 1 according to the present disclosure executes processing to prevent a third party from identifying that the user U1 is using the terminal device 14-1 and the wireless communication device 10-1 and the wireless communication device 10-3 are communicating with each other, for example. In other words, the communication system 1 executes processing to prevent a third party from identifying that the user U1 is accessing the server device 12.

### (Terminal Device)

An example of a configuration of a wireless communication device according to the present disclosure will be described using FIG. 2. FIG. 2 is a block diagram illustrating an example of a configuration of a terminal device according to the present disclosure.

As illustrated in FIG. 2, a wireless communication device 10 includes an input unit 20, an audio input unit 22, a display unit 24, an audio output unit 26, a communication unit 28, a storage unit 30, and a control unit 32. The wireless communication device 10 is, for example, a wireless communication device for business use, a mobile phone, a smartphone, or a tablet terminal, but is not limited thereto.

The input unit 20 receives various types of operation on the terminal device. The input unit 20 is implemented by various input devices, for example, switches, buttons, and a touch panel.

The audio input unit 22 detects voice of a user who is using the wireless communication device 10. The audio input unit 22 converts the detected voice into a voice signal. The audio input unit 22 is implemented by a microphone.

The display unit 24 displays various types of information. For example, the display unit 24 is implemented by a display, such as a liquid crystal display or an organic electro-luminescence (EL) display.

The audio output unit 26 is a speaker that outputs various types of audio. The audio output unit 26 outputs, for example, voice of a communication partner.

The communication unit 28 is a communication interface that implements communication between the wireless communication device 10 and an external device. The communication unit 28 implements, for example, communication between the wireless communication device 10 and another wireless communication device 10. The communication unit 28 is implemented by, for example, a communication circuit.

The storage unit 30 stores various types of information. The storage unit 30 stores information, such as information related to processing performed by the control unit 32 and programs. The storage unit 30 includes, for example, at least one of: a main storage device, such as a random access memory (RAM) or a read only memory (ROM); and an external storage device, such as a hard disk drive (HDD).

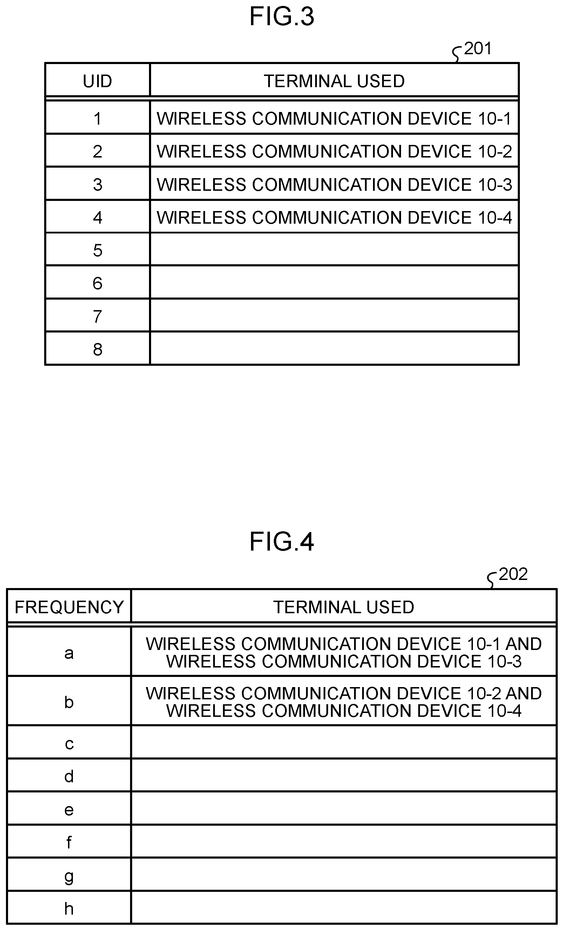

The storage unit 30 stores management tables indicating identification information including: information indicating a UID assigned to the wireless communication device 10; and information indicating a usage status of a frequency used by the wireless communication device 10 for communication. FIG. 3 and FIG. 4 are diagrams illustrating an example of the identification information in the management tables according to the embodiment.

A table 201 illustrated in FIG. 3 indicates the UID assigned to the wireless communication device 10. The table 201 includes items, such as "UID" and "User Terminal".

"UID" indicates an identifier assigned to the wireless communication device 10. "User Terminal" indicates the wireless communication device 10 to which the UID is assigned. According to the table 201, the wireless communication device 10-1 has a UID of "1", the wireless communication device 10-2 has a UID of "2", the wireless communication device 10-3 has a UID of "3", and the wireless communication device 10-4 has a UID of "4". Eight UIDs, "1" to "8", are illustrated in the table 201, but the present disclosure is not limited thereto. The number of UIDs included in the table 201 is not limited.

A table 202 illustrated in FIG. 4 indicates the frequency assigned to the wireless communication device 10. The table 202 includes items, such as "Frequency" and "User Terminal".

"Frequency" indicates assignment of the frequency used by the wireless communication device 10 for wireless communication. "User Terminal" indicates the wireless communication device 10 to which the frequency is assigned. According to the table 202, the wireless communication device 10-1 and the wireless communication device 10-2 use a frequency of "a" for communication, and the wireless communication device 10-3 and the wireless communication device 10-4 use a frequency of "b" for communication. The table 202 conceptually indicates the frequencies using labels, such as "a", but actual frequencies are indicated by specific numerical values. The table 202 indicates eight frequencies of "a" to "h", but the present disclosure is not limited thereto. The number of frequencies included in the table 202 is not limited.

The control unit 32 controls each unit of the wireless communication device 10. The control unit 32 has, for example, an information processing device, such as a central processing unit (CPU) or a microprocessing unit (MPU), and a storage device, such as a RAM or ROM. The control unit 32 executes a program that controls operation of the wireless communication device 10 according to the present disclosure. The control unit 32 may be implemented by, for example, an integrated circuit, such as an application specific integrated circuit (ASIC) or a field programmable gate array (FPGA). The control unit 32 may be implemented by a combination of hardware and software.

The control unit 32 includes a management unit 40 and a communication control unit 42.

The management unit 40 manages identification information including an identifier for identifying the wireless communication device 10 and a usage status of a frequency usable by the communication unit 28 for communication. A management unit 40 of a specific wireless communication device 10 also manages a management table including identification information of a plurality of wireless communication devices 10. In a case where a predetermined condition is satisfied, the management unit 40 assigns, as new identification information, at least one of an unused identifier and an unused frequency, to its own wireless communication device 10 and a first wireless communication device that is one of the other wireless communication devices 10, on the basis of the identification information. For example, after the communication unit 28 performs communication with the first wireless communication device, the management unit 40 assigns, as new identification information, at least one of an identifier not being used currently and a frequency not being used currently, to its own wireless communication device 10 and the first wireless communication device, on the basis of the identification information.

By using the identification information assigned to its own wireless communication device 10, the communication control unit 42 controls the communication unit 28 to perform communication with the first wireless communication device. Specifically, the communication control unit 42 controls the communication unit 28 to perform communication with the first wireless communication device, using the UID assigned to its own wireless communication device 10 as transmission source information, using the UID assigned to the first wireless communication device as transmission destination information, and using the communication frequency assigned to its own wireless communication device 10. In a case where the management unit 40 of its own wireless communication device 10 manages the management tables, new identification information is assigned to its own wireless communication device 10 and the first wireless communication device after the communication with the first wireless communication device is performed. In a case where the new identification information has been assigned, the communication control unit 42 controls the communication unit 28 to update communication settings for communication with the first wireless communication device by using the newly assigned identification after transmitting the new identification information to the first wireless communication device via the communication unit 28. The newly assigned identification information is encrypted and transmitted to the first wireless communication device through communication using the pre-update identification information.

In a case where the management unit 40 of its own wireless communication device 10 manages the management tables, the communication control unit 42 newly assigns identification information to its own wireless communication device 10 and the first wireless communication device, and transmits, via the communication unit 28, update information to a second wireless communication device that similarly manages management tables, the second wireless communication device being different from the first wireless communication device and being one of the other wireless communication devices 10, by using identification information of the second wireless communication device, the update information indicating that the identification information of its own wireless communication device 10 and the first wireless communication device has been updated. The update information is a notification for keeping content of the management tables managed by the management unit 40 of its own wireless communication device 10 identical to content of the management tables managed by the management unit 40 of the second wireless communication device that has received the update information.

In a case where the communication unit 28 receives, from the second wireless communication device, update information indicating that identification information used by the second wireless communication device and a third wireless communication device has been updated, the management unit 40 updates the identification information of the second wireless communication device and the third wireless communication device, the third wireless communication device being different from the first wireless communication device and the second wireless communication device and being one of the other wireless communication devices 10.

### (Server Device)

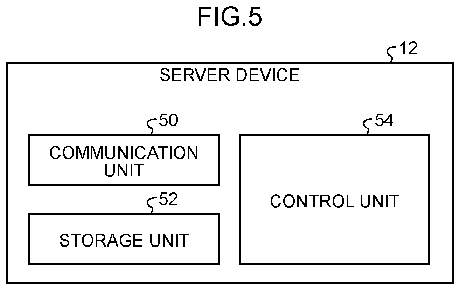

An example of a configuration of a server device according to the present disclosure will be described using FIG. 5. FIG. 5 is a block diagram illustrating the example of the configuration of the server device according to the present disclosure.

As illustrated in FIG. 5, the server device 12 includes a communication unit 50, a storage unit 52, and a control unit 54.

The communication unit 50 is a communication interface that implements communication between the server device 12 and an external device. The communication unit 50 implements, for example, communication between the server device 12 and another wireless communication device 10. The communication unit 50 is implemented by, for example, a communication circuit.

The storage unit 52 stores various types of information. The storage unit 52 stores various types of information to be provided to a user. The storage unit 52 stores information, such as information related to processing performed by the control unit 54 and programs. The storage unit 52 includes, for example, at least one of a main storage device, such as a RAM or a ROM, and an external storage device, such as an HDD.

According to the present disclosure, the storage unit 52 may store the table 201 and the table 202 indicating identification information. That is, the server device 12 may manage identification information of each wireless communication device 10.

The control unit 54 controls each unit of the server device 12. The control unit 54 has, for example, an information processing device, such as CPU or an MPU, and a storage device, such as a RAM or a ROM. The control unit 32 executes a program that controls operation of the server device 12 according to the present disclosure. The control unit 32 may be implemented by, for example, an integrated circuit, such as an ASIC or an FPGA. The control unit 32 may be implemented by a combination of hardware and software.

### [Wireless Communication Processing]

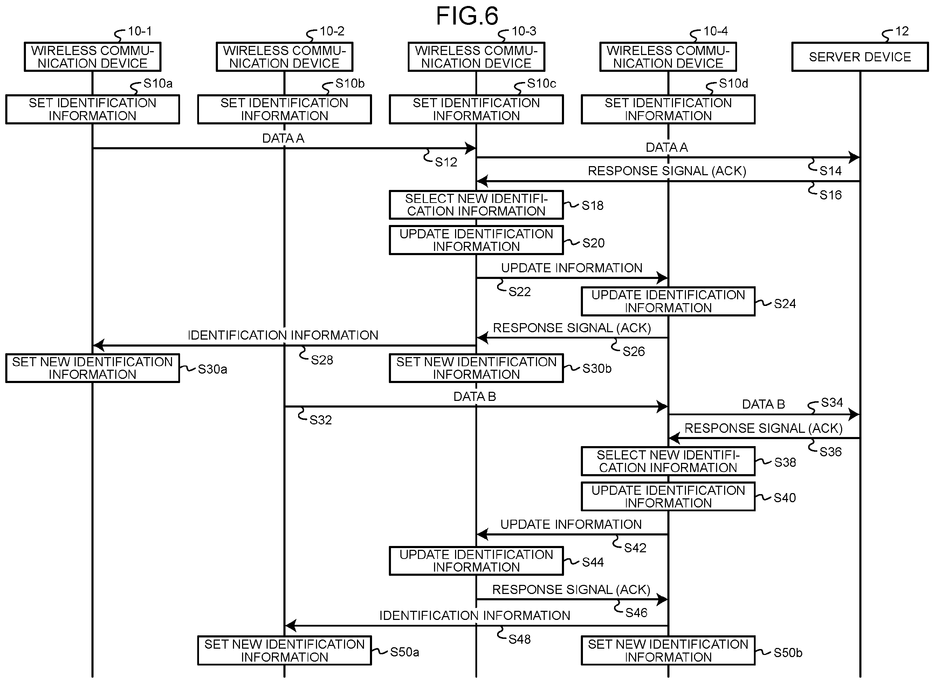

A flow of wireless communication processing according to the embodiment will be described using FIG. 6. FIG. 6 is a sequence diagram illustrating the flow of the wireless communication processing according to the embodiment.

FIG. 6 illustrates a process in which the wireless communication device 10-1 and the wireless communication device 10-3 perform communication with each other and the wireless communication device 10-2 and the wireless communication device 10-4 perform communication with each other.

A management unit 40 of the wireless communication device 10-1 sets identification information of the wireless communication device 10-1 (Step S10a). For example, the management unit 40 of the wireless communication device 10-1 sets its UID to "1" and a frequency to be used for communication to "a". The settings are input, for example, by a user operating the wireless communication device 10-1 according to the table 201 and the table 202 that are in an initial state.

A management unit 40 of the wireless communication device 10-2 sets identification information of the wireless communication device 10-2 (Step S10b). For example, the management unit 40 of the wireless communication device 10-2 sets its UID to "2" and a frequency to be used for communication to "b". The settings are input, for example, by a user operating the wireless communication device 10-2 according to the table 201 and the table 202 that are in the initial state.

A management unit 40 of the wireless communication device 10-3 sets identification information of the wireless communication device 10-3 (Step S10c). For example, the management unit 40 of the wireless communication device 10-3 sets its UID to "3" and a frequency to be used for communication to "a". The settings are input, for example, by a user operating the wireless communication device 10-3 according to the table 201 and the table 202 that are in the initial state.

A management unit 40 of the wireless communication device 10-4 sets identification information of the wireless communication device 10-4 (Step S10d). For example, the management unit 40 of the wireless communication device 10-4 sets its UID to "4" and a frequency to be used for communication to "b". The settings are input, for example, by a user operating the wireless communication device 10-4 according to the table 201 and the table 202 that are in the initial state. As to the setting from Step S10a to Step S10d, a system administrator may set each wireless communication device 10 beforehand according to the table 201 and the table 202 that are in the initial state and provide the set wireless communication devices 10 to respective users.

A communication control unit 42 of the wireless communication device 10-1 transmits data A input by the user using the terminal device 14-1 to the wireless communication device 10-3 via a communication unit 28 (Step S12). Specifically, the communication control unit 42 of the wireless communication device 10-1 transmits the data A with the UID of the transmission source set to "1" and the UID of the transmission destination set to "3" and at the frequency "a", and the wireless communication device 10-3 having its UID set to "3" thereby receives the data A.

A communication control unit 42 of the wireless communication device 10-3 transmits the data A received from the wireless communication device 10-1 to the server device 12 (Step S14).

Upon receipt of the data A from the wireless communication device 10-3, the server device 12 transmits a response signal (ACK) to the wireless communication device 10-3 (Step S16).

Upon receipt of the response signal (ACK) from the server device 12, the management unit 40 of the wireless communication device 10-3 selects new identification information to be assigned to the wireless communication device 10-1 and the wireless communication device 10-3 (Step S18). Specifically, on the basis of the table 201 illustrated in FIG. 3 and the table 202 illustrated in FIG. 4, the management unit 40 of the wireless communication device 10-3 selects, as the new identification information, an unused UID and an unused frequency whose user terminal fields are blank.

For example, the management unit 40 of the wireless communication device 10-3 selects, as a new UID, an unused UID in order from the top of the table 201 (in ascending order of UID in the table 201). For example, the management unit 40 of the wireless communication device 10-3 selects "5" as a UID of the wireless communication device 10-1 and "6" as a UID of the wireless communication device 10-3.

For example, the management unit 40 of the wireless communication device 10-3 selects, as a new frequency, an unused frequency from the top of the table 202 (in ascending order of frequency in the table 202). For example, the management unit 40 of the wireless communication device 10-3 selects "c" as a frequency used for communication between the wireless communication device 10-1 and the wireless communication device 10-3.

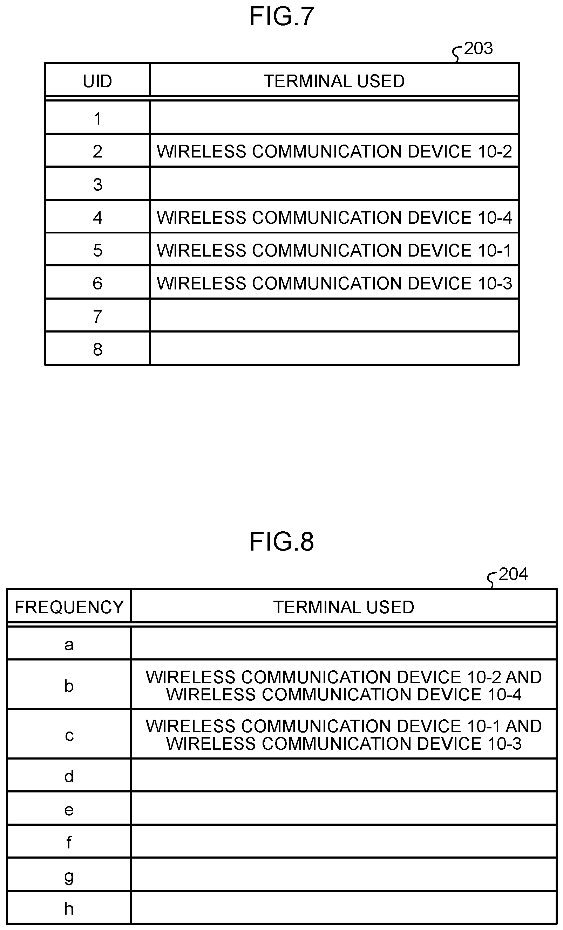

The management unit 40 of the wireless communication device 10-3 updates identification information stored in a storage unit 30 of the wireless communication device 10-3 (Step S20). FIG. 7 and FIG. 8 are diagrams for description of a method of updating identification information, according to the embodiment.

As illustrated in FIG. 7, the management unit 40 of the wireless communication device 10-3 deletes the wireless communication device 10-1 from the field corresponding to the UID "1" in the table 201 stored in the storage unit 30 of the wireless communication device 10-3 (leaving the field blank) and deletes the wireless communication device 10-3 from the field corresponding to the UID "3" therein (leaving the field blank). The management unit 40 of the wireless communication device 10-3 then updates the table 201 to a table 203 by adding (listing) the wireless communication device 10-1 in the field corresponding to the UID "5" in the table 201 and adding (listing) the wireless communication device 10-3 in the field corresponding to the UID "6" therein.

As illustrated in FIG. 8, the management unit 40 of the wireless communication device 10-3 deletes the wireless communication device 10-1 and the wireless communication device 10-3 from the field corresponding to the frequency "a" in the table 202 stored in the storage unit 30 of the wireless communication device 10-3 (leaving the field blank). The management unit 40 of the wireless communication device 10-3 then updates the table 202 to a table 204 by adding (listing) the wireless communication device 10-1 and the wireless communication device 10-3 to the field corresponding to the frequency "c" in the table 202.

The description now returns to FIG. 6. The communication control unit 42 of the wireless communication device 10-3 transmits update information indicating the update made to the identification information to the wireless communication device 10-4 (Step S22).

The management unit 40 of the wireless communication device 10-4 updates, on the basis of the update information received from the wireless communication device 10-3, identification information stored in a storage unit 30 of the wireless communication device 10-4 (Step S24). The table 201 and the table 202 stored in the storage unit 30 of the wireless communication device 10-4 are thereby respectively updated to the table 203 and the table 204. That is, the management tables respectively stored in the wireless communication device 10-3 and the wireless communication device 10-4 are synchronized.

A communication control unit 42 of the wireless communication device 10-4 transmits a response signal (ACK) indicating that the management tables have been synchronized, to the wireless communication device 10-3 via a communication unit 28 (Step S26).

The communication control unit 42 of the wireless communication device 10-3 transmits identification information to be set by the wireless communication device 10-1 to the wireless communication device 10-1 via a communication unit 28 (Step S28). Specifically, the communication control unit 42 of the wireless communication device 10-3 transmits the identification information with the UID of the transmission source set to "3" and the UID of the transmission destination set to "1" and at the frequency "a", and the wireless communication device 10-1 having its UID set to "1" thereby receives the identification information. The identification information includes information to be used by the wireless communication device 10-1 and the wireless communication device 10-3 in the next communication, the information indicating that the UID of the wireless communication device 10-1 is "5", the UID of the wireless communication device 10-3 is "6", and the frequency is "c".

The management unit 40 of the wireless communication device 10-1 sets new identification information for the wireless communication device 10-1 on the basis of the identification information received from the wireless communication device 10-3 (Step S30a). Specifically, the management unit 40 of the wireless communication device 10-1 sets its own UID to "5", the UID of the wireless communication device 10-3, which is the communication partner, to "6", and the frequency to be used for communication with the wireless communication device 10-3 to "c".

The management unit 40 of the wireless communication device 10-3 sets new identification information for the wireless communication device 10-3 on the basis of the updated identification information (Step S30b). Specifically, the management unit 40 of the wireless communication device 10-3 sets its own UID to "6", the UID of the wireless communication device 10-1, which is the communication partner, to "5", and the frequency to be used for communication with the wireless communication device 10-1 to "c". As a result, the wireless communication device 10-1 and the wireless communication device 10-3 are able to perform the next communication using a UID and a communication frequency that are different from the UID and the communication frequency used in Step S12 and Step S28.

A communication control unit 42 of the wireless communication device 10-2 transmits data B input by the user using the terminal device 14-2 to the wireless communication device 10-4 via a communication unit 28 (Step S32). Specifically, the communication control unit 42 of the wireless communication device 10-2 transmits the data B with the UID of the transmission source set to "2" and the UID of the transmission destination set to "4" and at the communication frequency "b", and the wireless communication device 10-3 having its UID set to "4" thereby receives the data B.

The communication control unit 42 of the wireless communication device 10-4 transmits the data B received from the wireless communication device 10-2 to the server device 12 (Step S34).

Upon receipt of the data B from the wireless communication device 10-4, the server device 12 transmits a response signal (ACK) to the wireless communication device 10-4 (Step S36).

Upon receipt of the response signal (ACK) from the server device 12, the management unit 40 of the wireless communication device 10-4 selects new identification information to be assigned to the wireless communication device 10-2 and the wireless communication device 10-4 (Step S38). Specifically, on the basis of the table 203 illustrated in FIG. 7 and the table 204 illustrated in FIG. 8, the management unit 40 of the wireless communication device 10-4 selects, as the new identification information, an unused UID and an unused frequency whose user terminal fields are blank.

For example, the management unit 40 of the wireless communication device 10-4 selects, as a new UID, an unused UID in order from the top of the table 203 (that is, in ascending order of UID in the table 203). For example, the management unit 40 of the wireless communication device 10-4 selects "7" as a UID of the wireless communication device 10-3 and "8" as a UID of the wireless communication device 10-4. The UIDs "1" and "3" are also unused then but it is herein assumed that "7" and "8" are selected as the UIDs. Any rule may be used for selecting an unused UID, but the rule preferably prevents the same UID from being selected periodically.

For example, the management unit 40 of the wireless communication device 10-4 selects, as a new frequency, an unused frequency from the top of the table 204 (in ascending order of frequency in the table 204). For example, the management unit 40 of the wireless communication device 10-4 selects "d" as a frequency used for communication between the wireless communication device 10-2 and the wireless communication device 10-4. The frequency "a" is also unused then, but it is assumed herein that the frequency "d" is selected. Any rule may be used for selecting an unused frequency, but the rule preferably prevents the same frequency from being selected periodically.

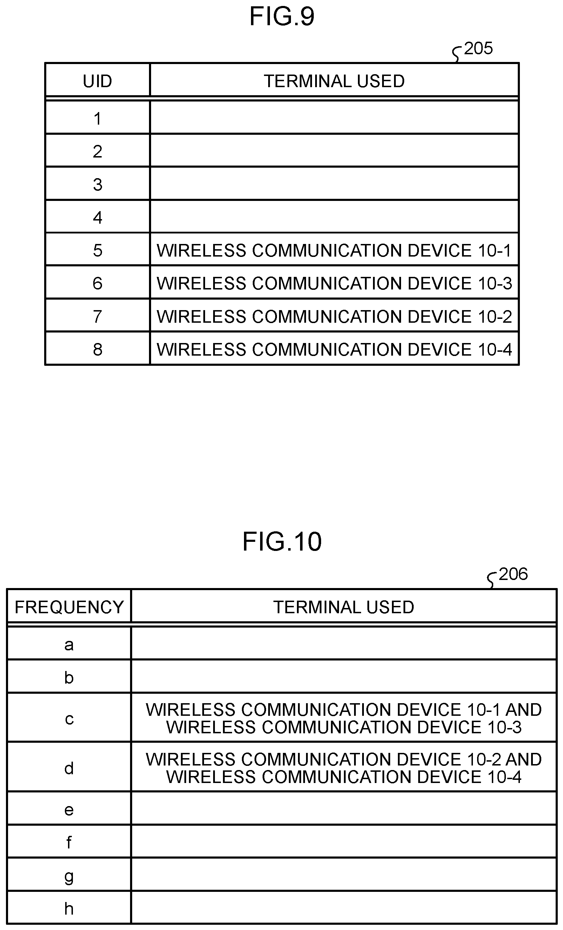

The management unit 40 of the wireless communication device 10-4 updates identification stored in the storage unit 30 of the wireless communication device 10-4 (Step S40). FIG. 9 and FIG. 10 are diagrams for description of a method of updating identification information, according to the embodiment.

As illustrated in FIG. 9, the management unit 40 of the wireless communication device 10-4 deletes the wireless communication device 10-2 from the field corresponding to the UID "2" in the table 203 stored in the storage unit 30 of the wireless communication device 10-4 (leaving the field blank) and deletes the wireless communication device 10-4 from the field corresponding to the UID "4" therein (leaving the field blank). The management unit 40 of the wireless communication device 10-4 then updates the table 203 to a table 205 by adding (listing) the wireless communication device 10-2 in the field corresponding to the UID "7" in the table 201 and adding (listing) the wireless communication device 10-4 in the field corresponding to the UID "8" therein.

As illustrated in FIG. 10, the management unit 40 of the wireless communication device 10-4 deletes the wireless communication device 10-2 and the wireless communication device 10-4 from the field corresponding to the frequency "b" in the table 204 stored in the storage unit 30 of the wireless communication device 10-3 (leaving the field blank). The management unit 40 of the wireless communication device 10-4 then updates the table 204 to a table 206 by adding (listing) the wireless communication device 10-2 and the wireless communication device 10-4 to the field corresponding to the frequency "d" in the table 203.

The description now returns to FIG. 6. The communication control unit 42 of the wireless communication device 10-4 transmits update information indicating the update made to the identification information to the wireless communication device 10-3 (Step S42).

The management unit 40 of the wireless communication device 10-3 updates, on the basis of the update information received from the wireless communication device 10-4, identification information stored in the storage unit 30 of the wireless communication device 10-3 (Step S44). The table 203 and the table 204 stored in the storage unit 30 of the wireless communication device 10-3 are thereby respectively updated to the table 205 and the table 206. That is, the management tables respectively stored in the wireless communication device 10-3 and the wireless communication device 10-4 are synchronized.

The communication control unit 42 of the wireless communication device 10-4 transmits a response signal (ACK) indicating that the management tables have been synchronized, to the wireless communication device 10-4 via the communication unit 28 (Step S46).

The communication control unit 42 of the wireless communication device 10-4 transmits identification information to be set by the wireless communication device 10-2 to the wireless communication device 10-2 via the communication unit 28 (Step S48). Specifically, the communication control unit 42 of the wireless communication device 10-4 transmits the identification information with the UID of the transmission source set to "4" and the UID of the transmission destination set to "2" and at the frequency "b", and the wireless communication device 10-2 having its UID set to "2" thereby receives the identification information. The identification information includes information to be used by the wireless communication device 10-2 and the wireless communication device 10-4 in the next communication, the information indicating that the UID of the wireless communication device 10-2 is "7", the UID of the wireless communication device 10-4 is "8", and the frequency is "d".

The management unit 40 of the wireless communication device 10-2 sets new identification information for the wireless communication device 10-2 on the basis of the identification information received from the wireless communication device 10-4 (Step S50a). Specifically, the management unit 40 of the wireless communication device 10-2 sets its own UID to "7", the UID of the wireless communication device 10-4, which is the communication partner, to "8", and the frequency to be used for communication with the wireless communication device 10-4 to "d".

The management unit 40 of the wireless communication device 10-4 sets new identification information for the wireless communication device 10-4 on the basis of the updated identification information (Step S50b). Specifically, the management unit 40 of the wireless communication device 10-4 sets its own UID to "8", the UID of the wireless communication device 10-2, which is the communication partner, to "7", and the frequency to be used for communication with the wireless communication device 10-2 to "d". The process in FIG. 6 is then ended. As a result, the wireless communication device 10-2 and the wireless communication device 10-4 are able to perform the next communication using a UID and a communication frequency that are different from the UID and the communication frequency used in Step S32 and Step S48.

In a case where the row currently being used in the management table has reached the last row, the management unit 40 returns to the first row at the top and performs the assignment. For example, in the example illustrated in FIG. 9, because the UID "8" in the last row of the table 205 is currently being used, for the next assignment, the management unit 40 returns to the first row and assigns the UID "1".

Furthermore, with respect to the example illustrated in FIG. 6, it has been described that the wireless communication device 10-2 and the wireless communication device 10-4 communicate with each other in the processing from Step S32 to Steps S50a and S50b. In a case where the wireless communication device 10-1 and the wireless communication device 10-3 perform communication in Step S32 to Steps S50a and S50b, the identification information of the wireless communication device 10-1 and the wireless communication device 10-3 is updated.

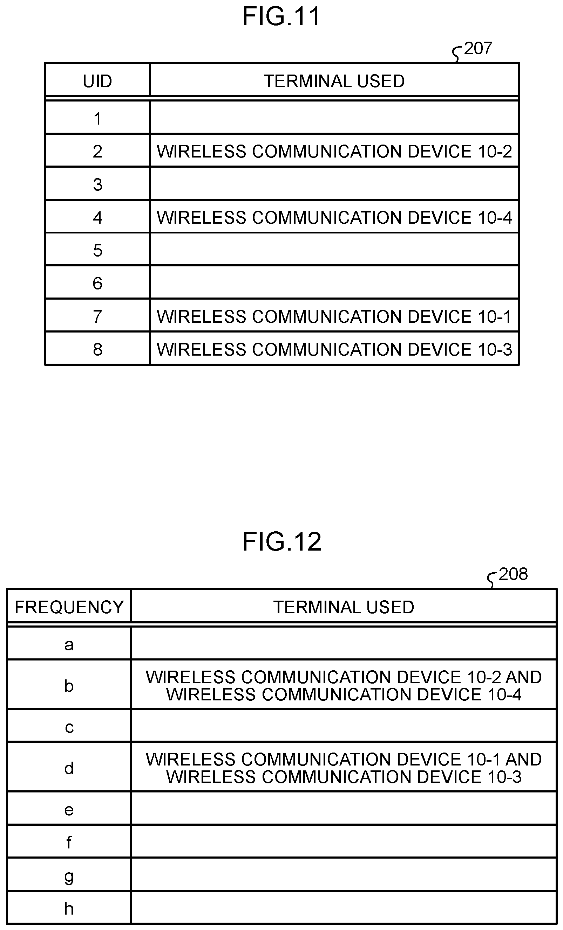

FIG. 11 and FIG. 12 are diagrams for description of a method of updating identification information, according to the embodiment. FIG. 11 and FIG. 12 illustrate management tables updated in a case where the wireless communication device 10-1 and the wireless communication device 10-3 perform communication in Step S32 to Steps S50a and S50b.

As illustrated in FIG. 11, the management unit 40 of the wireless communication device 10-4 deletes the wireless communication device 10-1 from the field corresponding to the UID "5" in the table 203 (leaving the field blank) and deletes the wireless communication device 10-2 from the field corresponding to the UID "6" therein (leaving the field blank). The management unit 40 of the wireless communication device 10-4 then updates the table 203 to a table 207 by adding (listing) the wireless communication device 10-1 in the field corresponding to the UID "7" in the table 201 and adding (listing) the wireless communication device 10-2 in the field corresponding to the UID "8" therein.

As illustrated in FIG. 12, the management unit 40 of the wireless communication device 10-4 deletes the wireless communication device 10-1 and the wireless communication device 10-3 from the field corresponding to the frequency "c" in the table 204 (leaving the field blank). The management unit 40 of the wireless communication device 10-4 then updates the table 204 to a table 208 by adding (listing) the wireless communication device 10-1 and the wireless communication device 10-3 to the field corresponding to the frequency "d" in the table 203.

In this case, the management unit 40 of the wireless communication device 10-1 sets its own UID to "7", the UID of the wireless communication device 10-3, which is the communication partner, to "8", and the frequency to be used for communication with the wireless communication device 10-3 to "d". Furthermore, the management unit 40 of the wireless communication device 10-3 sets its own UID to "8", the UID of the wireless communication device 10-1, which is the communication partner, to "7", and the frequency to be used for communication with the wireless communication device 10-1 to "d".

As described above, in the embodiment, every time communication between wireless communication devices is performed, identification information of the wireless communication devices is changed, through user operation. Accordingly, the embodiment enables improvement in confidentiality of communication.

### [Modification of Embodiment]

### (Wireless Communication Processing)

Wireless communication processing according to a modification of the embodiment will now be described. In the modification of the embodiment, a process of updating identification information of wireless communication devices 10 every time a predetermined time period elapses is executed.

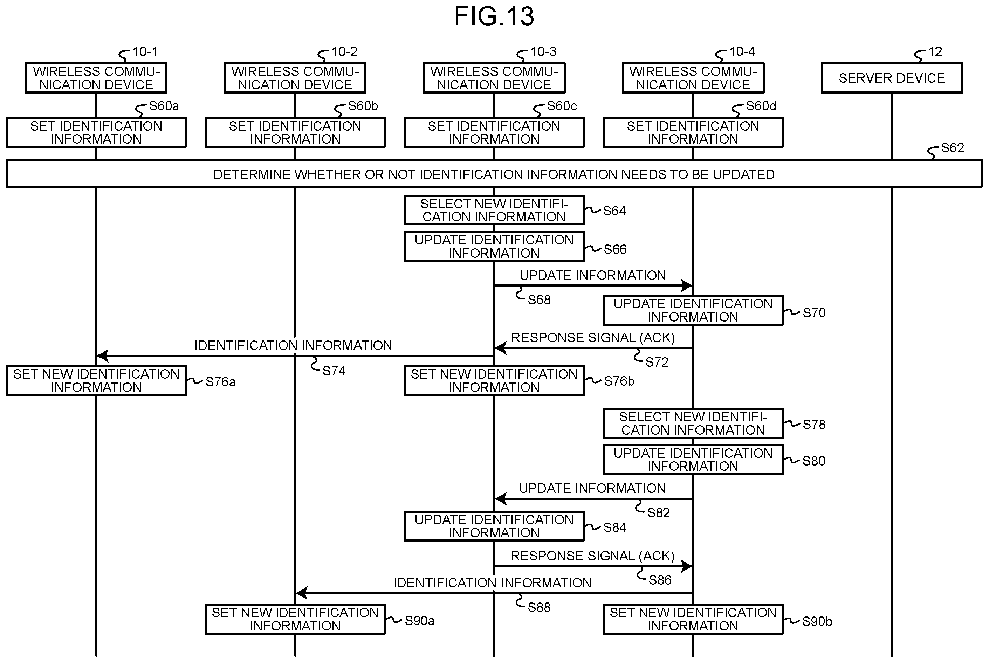

A flow of the wireless communication processing according to the modification of the embodiment will be described using FIG. 13. FIG. 13 is a sequence diagram illustrating the flow of the wireless communication processing according to the modification of the embodiment.

Processing from Step S60a to Step S60d is the same as the processing from Step S10a to Step S10d illustrated in FIG. 6, and description thereof will thus be omitted.

The management unit 40 of the wireless communication device 10-3 or the wireless communication device 10-4 determines whether or not identification information needs to be updated (Step S62). Specifically, the management unit 40 of the wireless communication device 10-3 or the wireless communication device 10-4 determines that the identification information needs to be updated in a case where a predetermined time period has elapsed since the communication system 1 was started, or in a case where a predetermined time period has elapsed since the identification information was last updated. The predetermined time period is, for example, a few minutes, but is not limited thereto.

Processing from Step S64 to Steps S76a and S76b is the same as the processing from Step S18 to Steps S30a and S30b illustrated in FIG. 6 respectively, and description thereof will thus be omitted. Processing from Step S78 to Steps S90a and S90b is the same as the processing from Step S38 to Steps S50a and S50b illustrated in FIG. 6 respectively, and description thereof will thus be omitted. That is, in the modification of the embodiment, in a case where a predetermined time period has elapsed since the communication system 1 was started, or in a case where a predetermined time period has elapsed since the identification information was last updated, the identification information of each radio is automatically updated.

As described above, in the modification of the embodiment, in a case where a predetermined time period has elapsed since the communication system 1 was started, or in a case where a predetermined time period has elapsed since the identification information was last updated, the identification information of the wireless communication devices is changed. Accordingly, the modification of the embodiment enables improvement in confidentiality of communication. The above-described embodiment and the modification of the embodiment may be implemented in combination. Specifically, in the above-described embodiment, an update of identification information is triggered by communication between wireless communication devices, but if no update of the identification information triggered by communication between the wireless communication devices is performed even after a predetermined time period has elapsed since the update, an update of the identification information may be triggered by the elapse of the predetermined time period.

The components of each device have been functionally and conceptually illustrated in the drawings and need not necessarily be physically configured as illustrated therein. That is, specific forms of distribution and integration of each device are not limited to those illustrated in the drawings, and all or part thereof may be configured to be functionally or physically distributed or integrated in any units according to various loads and usage conditions, for example. Such distribution and integration may be performed dynamically.

Embodiments of the present disclosure have been described above, but the present disclosure is not to be limited by these embodiments. Furthermore, the components described above include those readily conceived of by those skilled in the art, those that are substantially the same, and those falling within the scope of so-called equivalents. Furthermore, the components described above may be combined as appropriate. Furthermore, various omissions, substitutions, or modifications may be made to the components without departing from the gist of the embodiments described above.

### Industrial Applicability

A wireless communication device according to the present disclosure is applicable to, for example, wireless communication devices for business use, mobile phones, smartphones, and tablet terminals.

### Reference Signs List

1 Communication system
10, 10-1, 10-2, 10-3, 10-4 Wireless communication device
12 Server device
14-1, 14-2 Terminal device
20 Input unit
22 Audio input unit
24 Display unit
26 Audio output unit
28, 50 Communication unit
30, 52 Storage unit
32, 54 Control unit
40 Management unit
42 Communication control unit

## Claims

1. A wireless communication device, comprising:
a communication unit configured to communicate with predetermined wireless communication devices;
a management unit configured to manage identification information and select identification information used by the wireless communication devices, the identification information including identifiers for identifying the wireless communication devices and usage statuses of frequencies usable for communication by the communication unit; and
a communication control unit configured to control the communication unit to perform communication by using the identification information assigned to the own wireless communication device, wherein
in a case where a predetermined condition is satisfied, the management unit is configured to assign a newly selected piece of the identification information, the newly selected piece including at least one of an unused one of the identifiers and an unused one of the frequencies, and the communication control unit is configured to control the communication unit to communicate with a first wireless communication device that is one of the predetermined wireless communication devices.

2. The wireless communication device according to claim 1, wherein the management unit is configured to assign, as a new piece of the identification information, at least one of an unused one of the identifiers and an unused one of the frequencies to the own wireless communication device and the first wireless communication device every time the communication unit performs communication with the first wireless communication device.

3. The wireless communication device according to claim 2, wherein
the management unit is configured to manage the identification information of the own wireless communication device and the predetermined wireless communication devices, and
in a case where the identification information is newly selected for the own wireless communication device and the first wireless communication device, the communication control unit is configured to transmit, by using the identification information of a second wireless communication device that is one of the predetermined wireless communication devices, update information indicating that the identification information assigned to the own wireless communication device and the first wireless communication device is to be updated, to the second wireless communication device via the communication unit.

4. The wireless communication device according to claim 3, wherein in a case where the communication unit receives, from the second wireless communication device, update information indicating that the identification information of the second wireless communication device and a third wireless communication device that is one of the predetermined wireless communication devices is to be updated, the management unit is configured to update the identification information of the second wireless communication device and the third wireless communication device.

5. The wireless communication device according to claim 1 or 2, wherein in a case where a predetermined time period has elapsed since the communication unit started communication, or in a case where a predetermined time period has elapsed since the new piece of the identification information was assigned, the management unit is configured to select and assign, as a new piece of the identification information, at least one of an unused one of the identifiers and an unused one of the frequencies to the own wireless communication device and the first wireless communication device.
